# EUROPEAN PATENT APPLICATION

(11) **EP 4 528 597 A1**
(43) Date of publication of application: **26.03.2025**
(21) Application number: 23199046.6
(22) Date of filing: 22.09.2023
(51) Int. Cl.: G06N 3/092

(54) **DEVICE AND METHOD FOR TRAINING A REINFORCEMENT LEARNING SYSTEM**

(71) Applicant: Robert Bosch GmbH, 70442 Stuttgart (DE)
(72) Inventor: Avner, Orly, Haifa (IL); Linial, Ori, Haifa (IL); Di Castro, Dotan, 3440619 Haifa (IL)

(57) **Abstract**

Computer-implemented method of training an agent for generating a diverse dataset of ordinary differential equations, wherein the agent comprises a neural network, wherein the agent selects actions from an action space based on outputs of the neural network to sequentially generate a set of ordinary differential equations, wherein the agent performs the selected actions, thereby consecutively building up the ordinary differential equations by concatenating mathematical operators and/or variables to form equations and wherein the agent receives a reward based on the selected actions after a complete set of ordinary differential equations is generated.

## Description

### Technical field

The invention relates to a method of training a reinforcement learning system for generating a diverse dataset of ordinary differential equations, to a corresponding system, a computer program, and a machine-readable storage medium.

### Technical background

Large data sets with physical multi-dimensional signals that obey Ordinary Differential Equations (ODEs) are particularly valuable in training machine learning systems for reliably recovering the symbolic form of dynamical laws governing or underlying a series of measurements of one or more physical quantities of a computer-controlled system and/or its environment. For instance, a symbolic form of a dynamical law allows for further dissemination of the inferred dynamics as well as meaningful modifications for predictions under inventions. Large datasets of this nature are difficult to obtain, and generating them is also a challenge, since it is difficult to determine a-priori which ODEs (combined with initial conditions) yield a valid solution.

### Prior art

In https://arxiv.org/abs/1912.01412 and \url{https://openreview.net/pdf?id=JDuEddUsSb} an approach is introduced to tackle the issue of large-scale data generation in the context of differential equations. This approach consists of a tree-based scheme from which ODEs are derived, combined with a large group of hand-crafted explicit rules. Formulating the aforementioned rules requires a great deal of expertise and effort. In addition, ensuring balanced and diverse exploration in this setup is challenging. The dataset acquired by the tree-based approach eventually contains a limited variety of equations.

### Disclosure of the invention

The invention addresses the problem of generating massive amounts of data for training large language models, focusing on physical multi-dimensional signals that obey ODEs. Instead of drawing equation components from a distribution and applying predefined rules to prune the results, a Reinforcement Learning (RL) agent is trained to generate sets of ODEs. Thus, after the agent's training process is complete, obtaining new equations boils down to running its policy. Compared to previous approaches, this approach yields a larger and more diverse dataset of ODEs with valid solutions.

According to a first aspect, the invention relates to a computer-implemented method of training an agent for generating a diverse dataset of ordinary differential equations. The agent may be given by a machine learning system. A neural network may be comprised by the agent. The neural network may be given by a fully connected neural network. Particularly, the fully connected neural network may be given by a Multi-Layer-Perceptron. Preferably, the fully connected neural network may comprise several hidden layers. For instance, the fully connected neural network may comprise two hidden layers with 64 units each as well as tanh nonlinearities. The agent selects actions from an action space based on outputs of the neural network, wherein the action space may comprise mathematical operators, constants, variables, and parenthesis. Subsequently, the agent performs the selected actions and receives a reward thereupon based on the selected actions. The method comprises a step of initializing the agent, wherein initializing comprises setting the parameters of the neural network. Preferably, the parameters may be initialized by random distributions. Alternatively, some or all parameters of the neural network may be received from a database or data storage. In a further step, environment parameters are received by the agent, wherein the environment parameters comprise a number N₁ of variables as well as N₁ numbers N_{2,i}, i =1, ... N₁, wherein each number N_{2,i} determines a number of operators. The environment parameters N₁ and N_{2,i}, i =1, ... N₁, may be obtained from random distributions. In a further method step a complete set of N₁ ODEs in symbolic form is sequentially generated. To this end, actions from the action space comprising mathematical operators, variables and parentheses are sequentially selected by the agent. The selected actions are concatenated to form ODEs in symbolic form. Number N_{2,i} thereby determines the number of mathematical operators that may occur in the ith ODE in the complete set of ODEs. In a further step, the generated complete set of ODEs is passed to a solver for validation of solvability of the complete set. Upon trying to solve the set of ODEs handed over to the solver, the solver may draw initial conditions and constants from stochastic distributions. In a further step, the agent receives a reward based on the validation result of the solver. Thereby, a positive reward is assigned for a set of ODEs with valid solutions, and a negative reward is assigned for a set of ODEs without valid solutions. The preceding steps are repeated for a plurality of episodes. Subsequently, current values of parameters of the network of the agent are adjusted by a policy optimization algorithm using the received rewards collected in the plurality of episodes.

A value for the reward may be a positive or a negative value, for instance a positive or negative real number. Preferably, the reward is a binary reward, wherein a positive real number may be assigned to a solvable set of ODEs and the corresponding negative real number (i.e. the negative real number whose absolute value equals that of the positive real number) may be assigned to a set of ODEs found to be "unsolvable" by the solver.

Preferably, the set of ODEs may characterize an electrical or chemical energy storage, in particular a fuel cell or battery. More preferably, the set of ODEs may characterize the performance, the aging, the charging, or the de-charging of an electrical of chemical energy storage, in particular a fuel cell or battery. In further embodiments, the set of ODEs may characterize the performance or the aging of a manufacturing machine.

The proposed method enables the agent to learn the rules of "legal", i.e. valid ODE generation autonomously, based on the acquired reward, making the task of formulating rules for ODE generation obsolete. In addition, effective exploration of the state space is easier to encourage in the proposed setting due to the inherent exploration employed by reinforcement learning agents, yielding a considerably richer and more diverse set of ODEs as compared to e.g. the tree-based attempts.

As supported by the aforementioned arguments, the proposed method solves the problem of obtaining a large-scale dataset with a large variety of valid ODEs.

Preferably, the action space comprises the following set of mathematical entities: cos, sin, exp, C, x;, (,), +, -, *, /, **, and END, wherein index i is assigned the values i = 1, ..., N₁. In the context of the disclosure, a mathematical entity may also be referred to/may be understood as mathematical expression or symbol. The entities cos, sin and exp symbolically represent the mathematical operators cosine, sine and exponential function. Further, +, -, *, /, ** denote the mathematical operators for addition, subtraction, multiplication, division, and exponentiation. Entities "(" and ")" denote parenthesis. C stands for a constant value and the xᵢ represent the equation variables. There may be more or less of such variables, depending on the environment parameter N₁ received at the beginning of the current episode. Preferably, the number of variables in the action space in an episode is adjusted to N₁ after the environment parameters have been received by the agent. For instance, if the value of N₁ is 3 in an episode, the number of variables is adjusted to three, accordingly, and the actions space comprises in this case three variables, e.g. x, y, and z (or, equivalently, x₁, x₂, x₃). The END is similar to an end-of-sentence token in Natural Language Processing (NLP), i.e. when the action END is selected, this indicates that the construction of an ODE is complete. In other words, when the action END is selected, generation of the current ODE is finished. Accordingly, the complete ODE is then given by the ordered concatenation of the actions previously selected in course of construction of that ODE. In case that the set of ODEs is not complete yet, after selecting the action END, the agent continuous with sequentially selecting actions from the action space in order to construct the next ODE in the set of N₁ ODEs.

Preferably, the agent selects the actions from the action space stochastically by drawing from an action distribution, wherein parameters of the action distribution are determined by the neural network. In particular, the parameters of the action distribution may comprise the mean of a Gaussian distribution with variable standard deviation.

Preferably, a state space representing the progress in sequential generation of ODEs is modelled, wherein a first state in the state space is defined by an empty set of ordinary differential equations. A current state may then contain all preceding actions previously selected by the agent and concatenated in the order of selection. In the current state, the agent may select an action from the action space, and the state immediately following the current state may be obtained by concatenating the current state with the action selected by the agent. For example, a current state may be given by "sin(exp(" and the agent may select the action "sin" from the action space. In this example, the next state following the current state is then obtained as the concatenation of "sin(exp(" with "sin", namely "sin(exp(sin". If the value of N₂ is, for example, 3 in a specific episode, a complete ODE generated in the aforementioned manner, may be given by "sin(exp(sin(x)))".

An intuitive way of understanding the agent's operation is through an NLP analogy, where the complete equation corresponds to a sentence. The agent generates one symbol at a time, similarly to the way that sentences are generated one word at a time.

It should be noted that throughout the invention, a complete set of N₁ ODEs generated by the agent may be understood as an ordered set of N₁ symbolic expressions of functions fᵢ, i=1,..., N₁, depending on N₁ dependent variables xᵢ as well as one independent variable t, wherein the ith function fᵢ contains N_{2,i} mathematical operators comprised in the action space. The independent variable t may be identified with a time variable. That is, in each episode, the agent may generate an ordered set of N₁ function fᵢ. The set of generated ordered functions may then be cast into a set of ordinary differential equations to be solved by the solver by identifying the ith function in the generated set with the time derivative of the ith variable comprised in the action space.

Preferably, the solver tries multiple initial conditions for a given set of ODEs before determining them as a set of ODEs without valid solution. Specifically, the solver may determine initial conditions and constants from stochastic distributions and may try to solve the set of ODEs passed over from the agent. If the solver finds a valid solution with the determined initial conditions and constants, a positive reward may be assigned to the corresponding set of ODEs. However, in cases where the solver may not determine a valid solution to the set of ODEs, the solver may retry to solve the set of ODEs with different initial conditions and constants for a predefined number of times. This procedure may be done in order not to steer the agent away from a set of ODEs simply because a certain initial condition or constant for it resulted in an invalid solution. Preferably, the process of trying to find a valid solution to a set of ODEs may be repeated a predefined number of times, for instance up to 25 times, wherein each time the solver may determine new values for initial conditions and constants from the corresponding random distributions. Only after unsuccessfully trying to solve the set of ODEs in this way for the predefined number of times, the set of ODE may be declared to be "unsolvable", i.e. to be an ODE without valid solution.

Preferably, the solver may be RK45. However, the component may be any off-the-shelf differential equation solver.

Preferably, the policy optimization algorithm is an actor critic policy optimization algorithm. For instance, the actor critic policy optimization algorithm may be given by the Proximal Policy Optimization (PPO) algorithm.

Preferably, a fixed-size buffer is defined for each ODE out of the set of ODEs to prevent mode-collapse scenarios. Mode-collapse scenarios may comprise equations made up of many nested and/or meaningless paratheses and/or of mutually cancelling operations. Over the course of the training process, the agent learns to plan its actions so that the buffer is filled with meaningful operators and operands.

The state space of all possible combinations of operators and operands is huge, making it difficult to explore effectively. Returning to the NLP analogy: like words in a sentence, symbols must obey certain rules for the equation to have mathematical meaning. For example, a cos operator cannot be followed by a + operator. Therefore, preferably, constraints may be enforced on action selection to ensure that generated ODEs follow mathematical rules. In particular, the aforementioned constraints may be enforced by using PPO with invalid action masking. These constraints allow to focus on the relevant part of the state space.

Preferably, in an embodiment, a set of ODEs with a positive reward is stored in a dataset together with the initial conditions and the constants used by the solver when determining the ODE to be valid, as well as the corresponding solution obtained by the solver. In other words, this embodiment may refer to the case when training is complete, and the agent may act as a data generator. The agent may then output sets of ODEs which are coupled with randomly drawn constants and initial conditions, to be solved by the solver. If the solver outputs a valid signal, the entire data point (i.e., ODEs, constants, ICs and corresponding solutions) may be appended to a dataset. Otherwise, a fixed number of retries with different constants and ICs may be made to either eventually end up with a valid solution after a predetermined number of attempts, which will be appended to the dataset or to determine the set of ODEs as "unsolvable". In the latter case, the ODEs may obviously not be appended to the dataset.

Preferably, the dataset may be used for training a second machine learning system for prediction of a set of ODEs describing a time-series of a performance, an aging, a charging cycle, or a de-charging cycle of a real world-system. In this case, the second machine learning system for prediction of a set of ODEs may receive time series as input in inference and may then provide a corresponding set of ODEs as output. Particularly, a real-world system may be given by an electrical or chemical energy storage, in particular a battery or fuel cell, or by a manufacturing machine. The time-series may comprise measured physical observables describing the state of the system over time.

Preferably, a performance, an aging, a charging cycle, or a de-charging cycle of the energy storage or the manufacturing machine, is predicted depending on the predicted set of ODEs of the trained second machine learning system, wherein the second machine learning system's prediction is based on a given time-series comprising measured physical observables describing the state of the energy storage or the manufacturing machine.

With the predicted set of ODEs determining the performance, aging or (de-) charging cycle of an energy storage or manufacturing machine, the dynamics of the energy storage or manufacturing machine can be better understood/explored and meaningful modifications to the real-world systems might be performed to improve its performance and or life cycles. Preferably, depending on the predicted set of ODEs determining the performance, aging or (de-)charging cycle of an energy storage or manufacturing machine, such storage or manufacturing machine is controlled to improve its performance, aging or (de-)charging.

According to a further aspect, the invention relates to a system configured to carry out the training method according to steps and/or features described above.

According to a further aspect, the invention relates to a computer program with machine-readable instructions, which, when executed on one or several computer(s), cause the computer(s) to perform one of the computer-implemented methods described above and below. Furthermore, according to another aspect, the invention relates to a machine-readable storage medium, on which the above computer program is stored.

Embodiments of the invention will be discussed with reference to the following figures in more detail. The figures show:
- Figure 1: a reinforcement learning system;
- Figure 2: a flow chart for a method of training a reinforcement learning system.

### Description of the embodiments

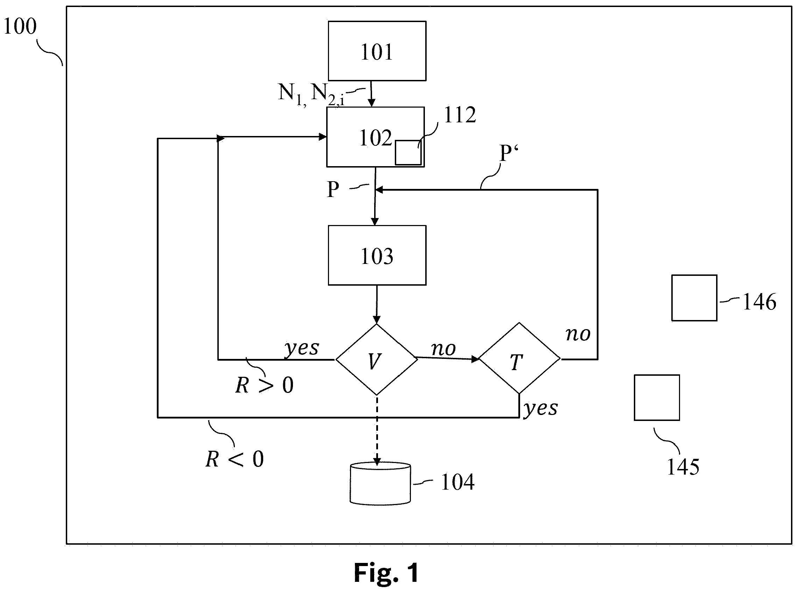

Figure 1 shows an embodiment of a reinforcement learning system 100. The system 100 comprises environment 101 and agent 102 as well as a solver 103. Additionally, system 100 comprises dataset storage 104. In other embodiments, dataset storage 104 may be an external component not comprised by the system 100 itself. Dataset storage 104 may be a database or a cloud storage. Agent 102 may be trained for generating a diverse dataset of ODEs and comprises neural network 112. Actions from an action space are selected by agent 102 based on outputs of the neural network 112. Environment 101 is responsible for setting up the task, by determining parameters N₁, N_{2,i}, with i = 1, ... N₁, wherein parameter N₁ determines the number of variables (i.e., the number of ODEs in the set) and number N_{2,i} determines the number of math operators in the ith ODE of the ODEs in the set. All parameters N₁, N_{2,i}, may be drawn from random distributions. Agent 102 receives environment parameters N₁, N_{2,i}, and begins each episode with an empty set of differential equations. At each time step, agent 102 chooses an action from the following set: cos, sin, exp, C, (, ), xᵢ, +, -, *, /, **, END, where i = 1, ... N₁. For instance, if N₁=3, the set might be given by cos, sin, exp, C, (, ), x, y, z +, -, *, /, **, END, wherein x, y, z denote the equation variables. C stands for a constant value and END is similar to an end-of-sentence token in Natural Language Processing. Depending on the number of variables received from environment 101 in each episode, there may be more or less variables in the set. For instance, for a number of variables N₁ = 4, the set may comprise variables w, x, y and z. An intuitive way of understanding agent's 102 operation is through an NLP analogy, where a complete equation corresponds to a sentence. The agent generates one symbol at a time, similarly to the way that sentences are generated one word at a time. Once a complete set of ODEs has been created by agent 101, the complete set it is passed on to solver 103, which might, for instance, be RK45, or any "off-the-shelf' differential equation solver. In order to solve the set of ODEs, values P comprising Initial Conditions (ICs) and value for constants in the ODEs are determined or, alternatively, are received by solver 103. The solver may generate values P himself or values P may be generated by another component and may be provided to solver 103. The purpose of solver 103 is to determine whether the generated set of ODEs has a valid solution. If the answer is positive ("yes"), agent 102 receives a positive reward (R>0). Otherwise, agent 102 receives a negative value as a reward (R<0). For a given set of ODEs, some Initial Conditions yield a valid solution while others don't. In order to not steer the agent away from a set of ODEs simply because a certain initial condition for it resulted in an invalid solution, solver 103 tries several values for initial conditions and constants for a given set of ODEs before declaring it "unsolvable". To this end, solver 103 searches if there is a valid solution. If the answer is affirmative, a positive reward (R>0) is assigned. Otherwise, if the answer is negative (e.g. due to a diverging solution, a timeout in solving, etc.), the solver may retry to find a valid solution. Preferably, solver 103 may retry to find a valid solution a predefined number of times, e.g. n_{end} times, wherein n_{end} is a natural number. For instance, n_{end} might be chosen to be 25. However, other choices for the maximal number n_{end} of attempts/retries might be possible. In this context, it is advantageous that the solver, or, alternatively, another component of the RL system keeps track of the actual number n of solver's 103 attempts to find a valid solution. If the solver may not find a valid solution, the actual number n of retries performed so far may be compared to the maximal number n_{end}. If n<n_{end} or n = n_{end}, the solver may retry to find a solution. In such cases, parameters P in the last try are replaced with newly drawn parameters P' and solver 103 repeats trying to solve the given set of ODEs with new parameters P'. However, if n>n_{end}, the set of ODEs is declared as "unsolvable" and a negative reward (R<0) is assigned to the set of ODEs.

The aforementioned steps may be repeated for a plurality of episodes, thereby collecting a plurality of sets of ODEs together with their corresponding rewards. Based upon these data, agent 102 is trained using a policy optimization RL algorithm that supports discrete actions. Preferably, said algorithm is the PPO algorithm.

After training is complete, agent 102 may act as a data generator. Agent 102 may then output sets of ODEs which are then coupled with randomly drawn constants and initial conditions P, to be sent to solver 103. In other embodiments, solver 103 determines values for IC and constants by himself. If solver 103 outputs a valid signal ("yes", i.e. the set of ODEs is found to be solvable), the entire data point (i.e., ODEs, constants, ICs and the solution determined by solver 103) may be appended to a dataset in dataset storage 104. Otherwise, a fixed number of retries with different constants and ICs may be performed, before a valid solution is found and the datapoint may be appended to the dataset in data storage 104.

Furthermore, the reinforcement learning system 100 may comprise at least one processor 145 and at least one machine-readable storage medium 146 containing instructions which, when executed by the processor 145, cause the system 100 to execute a training method according to one of the aspects of the invention.

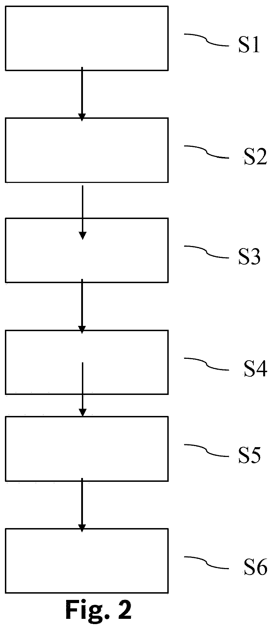

Figure 2 show a flowchart for a method of training reinforcement learning system 100. In method step S1, agent 102 is initialized. Agent 102 then receives environment parameters comprising a number N₁ of variables and a number N_{2,i} of operators in step S2. Thereby, index i runs over i = 1, ... N₁. In step S3 a complete set of N₁ ordinary differential equations in symbolic form is sequentially generated by agent 102. This may be achieved by agent 102 by sequentially selecting actions from the action space comprising mathematical operators and concatenating the selected actions to form ODEs, wherein N_{2,i} determines the number of mathematical operators in the ith ODE in the set. Subsequently, in step S4, the generated complete set of ODEs is sent to solver 103 for validation of solvability. Solver 103 may use initial conditions and constants, P, drawn from stochastic distributions in trying to find a valid solution to the set of ODEs. A reward R is received in step S5 by the agent, wherein the reward is based on the validation result of the solver. A positive reward may be assigned for a set of ODEs with valid solutions, and a negative reward may be assigned for a set of ODEs without valid solutions. Reward R may be a binary reward. In method step S6, the preceding steps are repeated for a plurality of episodes and current values of parameters of neural network 112 of agent 102 are adjusted by a policy optimization algorithm using the received rewards collected in the plurality of episodes.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N.* It may also be understood that elements of the plurality can be accessed by their index.

## Claims

1. Computer-implemented method of training an agent (102) for generating a diverse dataset of ordinary differential equations, wherein the agent comprises a neural network (112), wherein the agent selects actions from an action space based on outputs of the neural network, performs the selected actions and receives a reward based on the selected actions,
the method comprising:
- Initializing the agent (102) (S1),
- Receiving environment parameters (N₁, N_{2,i}) comprising a number N₁ of variables and N₁ numbers N_{2,i}, with i = 1, ..., N₁, wherein each N_{2,i} determines a number of operators (S2),
- Sequentially generating a complete set of N₁ ordinary differential equations in symbolic form by sequentially selecting actions from the action space comprising mathematical operators and concatenating the selected actions to form ordinary differential equations, wherein N_{2,i} determines the number of mathematical operators in the ith ordinary differential equation in the set (S3),
- Passing the generated complete set of ordinary differential equations to a solver (103) for validation of solvability, wherein the solver uses initial conditions and constants (P) drawn from stochastic distributions (S4),
- Receiving a reward (R) based on the validation result of the solver, wherein a positive reward is assigned for a set of ordinary differential equations with valid solutions, and a negative reward is assigned for a set of ordinary differential equations without valid solutions (S5),
- Repeating the preceding steps for a plurality of episodes and adjusting current values of parameters of the neural network (112) of the agent (102) by a policy optimization algorithm using the received rewards collected in the plurality of episodes (S5).

2. Method according to claim 1, wherein the action space comprises the mathematical entities
cos, sin, exp, C, xᵢ, (, ), +, -, *, /, **, and END,
wherein cos, sin, exp, +, -, *, /, ** denote mathematical operators and wherein x;, with i = 1, ... N₁, denote variables.

3. Method according to any of the preceding claims, wherein the agent (102) selects the actions from the action space stochastically by drawing from an action distribution, wherein parameters of the action distribution are determined by the neural network (112).

4. Method according to any one of the preceding claims, wherein a state space representing the progress in sequential generation of ordinary differential equations is modelled, wherein a first state in the state space is defined by an empty set of ordinary differential equations, wherein a current state contains all preceding actions selected by the agent (102) concatenated in the order of selection, wherein in the current state the agent selects an action from the predefined action space, wherein the state immediately following the current state is obtained by concatenating the current state with the action selected by the agent (102).

5. Method according to any one of the preceding claims, wherein the solver (103) tries multiple initial conditions for a given set of ordinary differential equations before determining them as a set of ordinary differential equations without valid solution.

6. Method according to any of the preceding claims, wherein the policy optimization algorithm is an actor critic policy optimization algorithm.

7. Method according to any of the preceding claims, wherein a fixed-size buffer is defined for each ordinary differential equation out of the set of ordinary differential equations to prevent mode-collapse scenarios.

8. Method according to any of the preceding claims, wherein constraints are enforced on action selection to ensure generated equations follow mathematical rules.

9. Method according to any of the preceding claims, wherein a set of ordinary differential equations with a positive reward (R>0) is stored in a dataset, together with the initial conditions and the constants (P, P') used by the solver (103), and the corresponding solution obtained by of the solver (103).

10. Method according to claim 9, wherein the dataset is used for training a second machine learning system for prediction of a set of ordinary differential equations describing a time-series of a performance, an aging, a charging cycle or a de-charging cycle of an energy storage or a manufacturing machine.

11. Method according to claim 10, further comprising the step:
- Predicting a performance, an aging, a charging cycle, or a de-charging cycle of the energy storage or manufacturing machine, depending on the predicted set of ordinary differential equations of the second machine learning system.

12. System (100), which is configured to carry out the method according to any one of the claims 1 to 11.

13. Computer program that is configured to cause a computer to carry out the method according to any one of the claims 1 to 11 with all of its steps if the computer program is carried out by a processor (145).

14. Machine-readable storage medium (146) on which the computer program according to claim 13 is stored.
